# EUROPEAN PATENT APPLICATION

(11) **EP 2 037 518 A1**
(43) Date of publication of application: **18.03.2009**
(21) Application number: 07745111.0
(22) Date of filing: 12.06.2007
(51) Int. Cl.: H01M 4/96, B01J 23/89, C01G 49/00, C01G 51/00, H01M 4/86, H01M 4/88, H01M 4/90, H01M 8/10

(54) **CARBON PARTICLE HAVING DEPOSITED FINE PARTICLES, PROCESS FOR PRODUCING THE SAME, AND ELECTRODE FOR FUEL CELL**

(30) Priority: 13.06.2006 JP 2006164095
(71) Applicant: Toyota Jidosha Kabushiki Kaisha, Toyota-shi, Aichi-ken 471-8571 (JP)
(72) Inventor: SAWAKI, Yuko, Ibaraki-shi, Osaka 567-8567 (JP); KISHIMOTO, Mikio, Ibaraki-shi, Osaka 567-8567 (JP); NAKANISHI, Haruyuki, Toyota-shi, Aichi 471-8571 (JP); MURATA, Shigeaki, Toyota-shi, Aichi 471-8571 (JP); IMANISHI, Masahiro, Toyota-shi, Aichi 471-8571 (JP)
(74) Representative: HOFFMANN EITLE
(86) International application number: PCT/JP2007/061824
(87) International publication number: WO 2007/145215

(57) **Abstract**

Carbon particles having fine particles deposited thereon which can be used as a substitute for the carbon particles having platinum deposited thereon and metallic platinum particles which are presently in general use as, e.g., a catalyst for electrodes in fuel cells. Compared to the conventional carbon particles having platinum deposited thereon, etc., the carbon particles are effective in greatly reducing the amount of platinum to be used. The carbon particles are **characterized by** comprising carbon particles and, deposited on the surface of the carbon particles, fine particles of a perovskite type composite metal oxide in each of which fine noble-metal particles are present throughout the whole particle. Also provided is a process for producing the carbon particles.

The carbon particles having deposited fine particles have a constitution in which fine particles of a perovskite type composite metal oxide each having fine noble-metal particles present throughout the whole perovskite type oxide particle and having a crystallite size of 1-20 nm are deposited on carbon particles. The process for producing such carbon particles having fine particles deposited thereon comprises preparing a solution containing fine perovskite type composite oxide particles and complex ions of a metal for constituting fine noble-metal particles, subsequently repeating the step of impregnating the solution into carbon particles and dried the particles to thereby adsorb complex ions of the metal onto the carbon particles, and then subjecting the resultant particles to heat treatment.

## Description

### Technical Field

The present patent application claims priority under the Paris Convention based on Japanese Patent Application No. 2006-164095 (filed on June 13, 2006), and the entire content of the aforementioned application is herein incorporated by reference.
The present invention relates to carbon particles that support thereon fine particles and a production process thereof, and more specifically, it relates to fine particle-supporting carbon particles that support thereon fine perovskite type composite metal oxide particles wherein fine noble metal particles exist throughout the perovskite type oxide particles, and also to a production process thereof and an electrode for fuel cells composed thereof.

### Background Art

Conventionally, metal particles, alloy particles, metal oxide particles, etc., supported on carrier particles have been used as catalysts for various uses including deodorants, antibacterial agents, automobile exhaust gas purifiers, fuel cells, and NOx reducers. Materials widely used for such carrier particles include carbon and metal oxides such as titanium oxide, zirconium oxide, iron oxide, nickel oxide, and cobalt oxide. In particular, catalysts comprising electrically conductive carbon particles as carrier can serve effectively as catalyst for fuel cell electrodes.

Among others, materials comprising a carbon carrier that supports platinum-ruthenium alloy particles and those comprising a carbon carrier that supports fine metallic platinum particles along with specific metal oxide particles, such as molybdenum oxide and cerium dioxide, as co-catalyst have been known to serve effectively as catalyst for electrodes. Patent document 1, for instance, describes that agglomeration of platinum particles can be reduced by depositing particles of a corrosion resistant oxide, such as cerium dioxide and zirconium oxide, on platinum particles followed by depositing the platinum particles on a carbon carrier. Patent documents 2 and 3 have proposed an electrode material that is produced by depositing particles of noble metal, such as platinum, on the surface of perovskite type titanium oxide particles and applying a paste of said noble metal-supporting oxide over a carbon membrane and described that the perovskite type titanium oxide works as co-catalyst to improve the catalytic ability.

On the other hand, some specific perovskite type composite metal oxides are known to be able to decompose NOx effectively, and Patent document 4 has proposed NOx contact catalysts comprising a carrier supporting such oxides. Patent document 5 describes that catalysts produced by depositing a noble metal, such as Pt, Pd and Rh, on such a perovskite type composite metal oxide carrier show high catalytic ability at very high temperatures above 500°C.

Processes available to deposit metal compound particles on the surface of a carrier include the following:
(1) To allow a carrier to adsorb metal colloid particles,
(2) To disperse carrier particles in an aqueous metal salt solution, and use an alkaline chemical agent to allow metal hydroxide to precipitate on the carrier surface
(3) To disperse fine particles to prepare a fine particle dispersion liquid, and then allow the fine particles to be fixed on the surface of a carrier.

Known methods that use such liquid phase processes are proposed in Patent documents 6 and 7. In Patent document 6, platinum-supporting carbon particles are dispersed in a mixed solution of appropriate metal salts, and the hydroxides of said metals are precipitated on the carbon particles using an alkaline chemical agent, followed by heating the solution in a reducing environment at 1000°C or above to allow the carbon particles to support fine alloy particles (fine particles of four metal alloy of platinum, molybdenum, nickel, and iron). The document specifies that the fine alloy particles should have a size of about 3 nm or more.

In the process to produce carbon particles supporting vanadium pentoxide proposed in Patent document 7, an organic solvent is added to the organic vanadium solution for solvation to produce organic complexes, which are then adsorbed on the carbon particles. In this case, the vanadium pentoxide supported on the carbon particles is in an amorphous state.

Besides, Patent document 8 describes a method using microwave plasma treatment to deposit metal oxide particles on carbon-based material. In the processes given as example, titanium oxide, nickel oxide, and cobalt oxide are deposited on carbon, and the document describes that the method can be applied to perovskite type composite metal oxides. With this method, it is possible to allow a carbon-based carrier to support a metal oxide that cannot be deposited easily on a carbon material because it requires a high oxidation temperature where the carbon material starts to burn. However, this method requires special equipment to carry out the plasma treatment.

[Patent document 1] Japanese Unexamined Patent Publication (Kokai) No. 2004-363056
[Patent document 2] Japanese Unexamined Patent Publication (Kokai) No. 2005-50759
[Patent document 3] Japanese Unexamined Patent Publication (Kokai) No. 2005-50760
[Patent document 4] Japanese Unexamined Patent Publication (Kokai) No. 5-261289
[Patent document 5] Japanese Unexamined Patent Publication (Kokai) No. 2001-269578
[Patent document 6] Japanese Unexamined Patent Publication (Kokai) No. 5-217586
[Patent document 7] Japanese Unexamined Patent Publication (Kokai) No. 2000-36303
[Patent document 8] Japanese Unexamined Patent Publication (Kokai) No. 11-28357

### Disclosure of Invention

Conventionally, however, metal particles, alloy particles, metal oxide particles, and carrier particles supporting them as described above do not have a sufficiently high corrosion resistance to serve as a catalyst for fuel cell electrodes. In the case of the conventional fuel cell electrode catalysts comprising metallic platinum particles, for instance, their catalytic ability is reduced largely because degradation is caused by the carbon monoxide poisoning of metallic platinum particles during use and also because adherence among platinum particles and their grain growth cannot be prevented completely as they are repeatedly exposed to a high temperature atmosphere at 100°C or above. Furthermore, the use of platinum in currently required amounts in these electrode catalysts is disadvantageous in terms of costs, and the reduction in the usage of platinum is now an urgent issue to prevent depletion of platinum.

Here, these catalysts comprising carrier particles that support both oxide particles and noble metal particles have been already known generally, and specific perovskite type composite metal oxides have also been used as known catalyst material for exhaust gas purifiers. Notwithstanding, any material that comprises a carbon carrier that supports dispersed composite particles that consist of perovskite type composite metal oxide particles and noble metal particles scattered not only on the surface but also throughout the interior of the former particles is not found in literature. The conventionally available materials contain various metal oxide particles (hereinafter simply referred to as "oxide particles") only to serve mainly as a co-catalyst to improve the catalytic ability of noble metal particles. For these materials to show catalytic ability, the noble metal particles need to exist on the outermost face of the catalyst or on the outermost face of the metal oxide particles (carrier particles) that work as co-catalyst (hereinafter simply referred to as "outermost face"), but on the other hand, the existence of noble metal particles on the outermost face can lead to problems because the corrosion of the noble metal particles by oxidation and carbon monoxide poisoning will not be prevented. Noble metal particles are provided on the outermost face in spite of these problems because contact between the noble metal particles and the reactant gas should be ensured for the noble metal particles to show their catalytic ability. If the noble metal particles are completely covered by oxide particles, the noble metal particles will be unable to come in contact with the reactant gas and will fail to work as catalyst.

To solve such problems as described above, the invention aims to provide highly corrosion resistant, fine particle-supporting carbon particles that can serve as alternative to platinum-supporting carbon particles and metallic platinum particles that are generally used as fuel cell electrode catalyst and that can largely decrease the usage of platinum, which is a precious resource, as compared with the conventional platinum-supporting carbon particles, and also aims to provide a production process thereof.

The invention adopts a constitution where noble metal elements having a catalyst function exist not only on the outermost face but also throughout perovskite type oxide particles to form oxide-metal composite particles and such noble metal particle-containing perovskite type oxide particles are deposited on the surface of carbon particles so that corrosion of said noble metal particles (typically fine platinum particles) by oxidation and carbon monoxide poisoning are prevented to improve their corrosion resistance.

Specifically, the fine particle-supporting carbon particles of the invention comprise carbon particles supporting fine perovskite type composite metal oxide particles and fine noble metal particles, said fine perovskite type composite metal oxide particles having a crystallite size in the range of 1 to 20 nm, and fine noble metal particles (for instance, fine platinum particles) smaller in particle diameter than the perovskite type particles existing throughout the perovskite type oxide particles, rather than only inside the particles or on their surfaces.

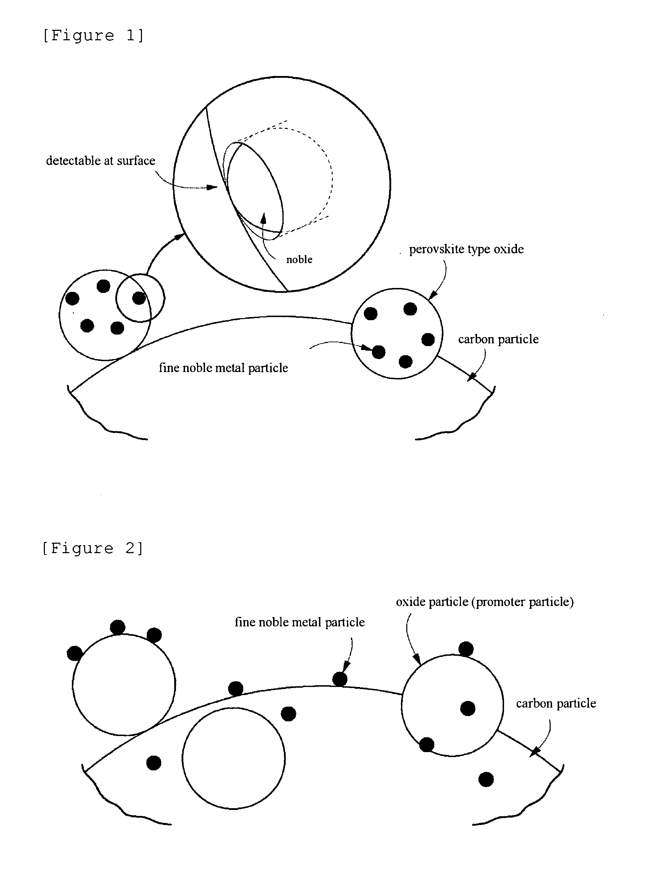

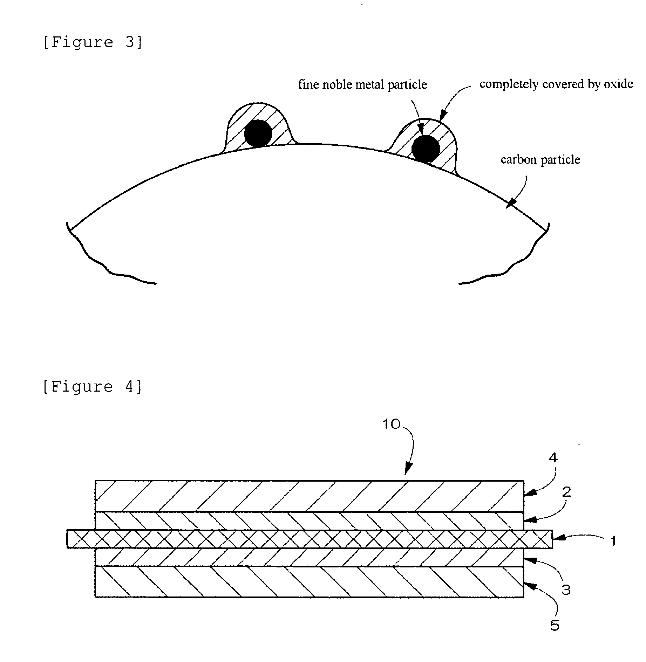

Here, said fine perovskite type composite metal oxide particles completely contain said fine noble metal particles without any gaps between them (as schematically shown in Figure 3), forming, for instance, (1) a composite structure consisting of metal oxide particles that are porous throughout their bodies, rather than only in their interiors or on their surfaces, and noble metal particles that exist in the pores of the former, or (2) a composite structure consisting of noble metal phases scattered in an oxide phase (as schematically shown in Figure 1), which is apparently an particle-structure basket that contains noble metal particles in the meshes. Such a configuration where fine noble metal particles exist throughout the particle structure of fine perovskite type composite metal oxide particles makes it possible to contribute to catalytic reactions, prevent corrosion, adherence and grain growth of the fine noble metal particles, and achieve high durability. Said configuration where fine noble metal particles exist throughout the particle structure does not mean that said fine noble metal particles exist only on the particle surface (including the surface in the pores), but it means that said fine noble metal particles exist at least in the interior part below the particle surface.

In obtaining said fine particle-supporting carbon particles, the inventors produced a solution of mixed complex ions of metals that would constitute said fine perovskite type composite metal oxide particles and fine noble metal particles, allowed them to be adsorbed on the surface of carbon particles, and heat-treated them, and they found that this process served to allow noble metal particle-containing fine perovskite type oxide particles to be supported on carbon particles while maintaining a monodisperse state for the primary particles.

Thus, the production process for the fine particle-supporting carbon particles of the invention is characterized in that a solution containing complex ions of metals that will constitute fine perovskite type composite metal oxide particles and noble metal particles is prepared first, and the operation of impregnating carbon particles with the resulting solution and drying them is then repeated to allow the complex ions of said metals to be adsorbed on the carbon particles, followed by heat treatment. This process serves to allow said noble metal particle-containing fine perovskite type oxide particles to be supported on said carbon particles while maintaining a monodisperse state for the primary particles.

Typical and preferred embodiments of the invention are described below.
<1> Fine particle-supporting carbon particles comprising carbon particles supporting fine perovskite type composite metal oxide particles and fine noble metal particles wherein the weight of the supported fine noble metal particles is from 1 to 20% based on that of the fine perovskite type composite metal oxide particles, said fine perovskite type composite metal oxide particles having a crystallite size of 1 to 20 nm, and fine noble metal particles smaller in particle diameter than said perovskite type oxide particles existing throughout the bodies of said perovskite type oxide particles.
<2> Fine particle-supporting carbon particles as described in paragraph <1> wherein said fine perovskite type composite metal oxide particles are represented by the general formula ABO₃ wherein A denotes one or more elements selected from the group consisting of lanthanum, strontium, cerium, calcium, yttrium, erbium, praseodymium, neodymium, samarium, europium, magnesium, and barium, and B denotes one or more transition metal elements selected from the group consisting of iron, cobalt, manganese, copper, titanium, chrome, nickel, niobium, lead, bismuth, antimony, and molybdenum.
<3> Fine particle-supporting carbon particles as described in paragraph <2> wherein said fine noble metal particles comprise one or more noble metal elements selected from the group consisting of platinum, ruthenium, palladium, and gold, or an alloy of said one or more noble metal elements and one or more transition metal elements selected from the group consisting of iron, cobalt, manganese, copper, titanium, chrome, nickel, niobium, lead, bismuth, antimony, and molybdenum.
<4> Fine particle-supporting carbon particles as described in any of paragraphs <1> to <3> wherein the ratio by weight of said supported fine perovskite type composite metal oxide particles and fine noble metal particles ([weight of fine perovskite type composite metal oxide particles and fine noble metal particles]/[total weight of the fine particle-supporting carbon particles]) is in the range of 5 to 50 wt%.
<5> Fine particle-supporting carbon particles as described in any of paragraphs <1> to <3> wherein the average particle diameter of said carbon particles that support fine perovskite type composite metal oxide particles and fine noble metal particles is in the range of 20 to 70 nm.
<6> Fine particle-supporting carbon particles as described in any of paragraphs <1> to <3> wherein they have an average particle diameter of from 20 to 90 nm.
<7> A process for producing fine particle-supporting carbon particles as described in paragraph <1> comprising the following steps: first, preparing a solution containing complex ions of metals and noble metals that are to constitute said fine perovskite type composite metal oxide particles and noble metal particles, then repeating the operation of impregnating carbon particles with the resulting solution and drying them to achieve adsorption of said complex ions on said carbon particles, and heat-treating them.
<8> A process for producing fine particle-supporting carbon particles as described in paragraph <1> comprising the following steps: first, preparing a solution containing complex ions of metals and noble metals that are to constitute said fine perovskite type composite metal oxide particles and noble metal particles, then repeating the operation of impregnating carbon particles with the resulting solution and drying them to achieve adsorption of said complex ions on said carbon particles, drying them in a low humidity atmosphere, and heat-treating them in an inert gas so that said fine perovskite type composite metal oxide particles are deposited and supported on the surface of said carbon particles.
<9> An electrode for fuel cells comprising fine particle-supporting carbon particles as described in any of paragraphs <1> to <6>.

The process to produce the fine particle-supporting carbon particles of the invention comprises the following steps: first, preparing a solution containing complex ions of metals (the metals that are to constitute the intended fine perovskite type composite metal oxide particles and fine noble metal particles), then repeating the operation of impregnating carbon particles with this solution and drying them to achieve adsorption of said complex ions on the surface of said carbon particles, drying them in a low humidity atmosphere (said "low humidity atmosphere" being defined as an environment with a humidity of 20% or less which may be achieved by using an absorbent or other agents for humidity control or by heating up to a temperature range of 90°C or below) to allow said fine metal oxide particle precursors to be precipitated on the surface of said carbon particles, followed by heat treatment. This process, which is designed for adsorption of complex ions of metals on the surface of carbon particles, can allow a carbon carrier to support deposited fine perovskite type composite oxide particles that have a crystallite size in the range of 1 to 20 nm and contain fine noble metal particles scattered throughout the particle bodies while maintaining a monodisperse state for the primary particles, which cannot be achieved by the conventional production processes.

The fine particle-supporting carbon particles of the invention thus obtained serve as functional material for electrode catalysts for fuel cells etc. In this invention, fine noble metal particles that can work effectively as catalyst for fuel cell electrodes exist throughout the bodies of perovskite type composite metal oxide particles including not only their outermost faces but also their interiors. This prevents corrosion of said fine noble metal particles during use, and also prevents adherence and grain growth of said fine noble metal particles, hopefully making it possible to produce highly durable electrode catalysts. Thus, the invention can provide fine particle-supporting carbon particles that can work as an alternative to the conventional platinum-supporting carbon particles used in catalysts for fuel cell electrodes, serving to largely reduce the usage of platinum, a precious resource, when used as such an alternative, as compared with the conventional electrode catalyst materials.

### Brief Description of Drawings

[Figure 1]
   Figure 1 schematically shows perovskite type composite metal oxide particles comprising fine noble metal particles existing throughout the bodies of the perovskite type oxide particles that are supported on carbon particles.
[Figure 2]
   Figure 2 schematically shows fine noble metal particles and metal oxide particles that are independently supported on carbon particles.
[Figure 3]
   Figure 3 schematically shows fine noble metal particles completely covered by oxide particles that are supported on carbon particles.
[Figure 4]
   Figure 4 schematically shows a cross-sectional view of the structure of a typical membrane electrode assembly (MEA) for solid-electrolyte fuel cells produced of the fine particle-supporting carbon particles, which is given as an example of the application of the fine particle-supporting carbon particles of the invention to an electrode catalyst.
[Figure 5]

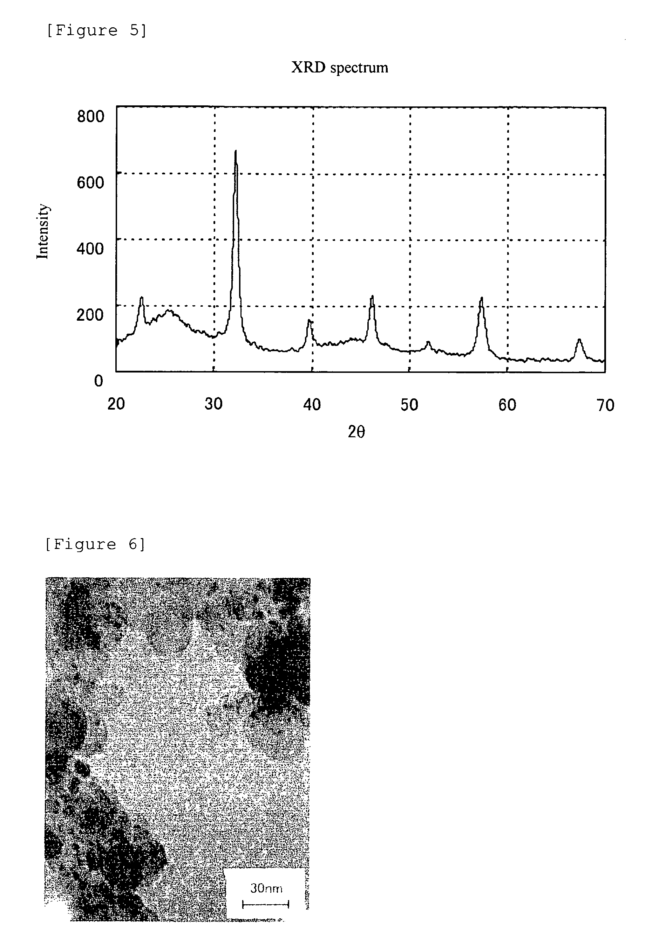

   Figure 5 shows an XRD spectrum of carbon particles supporting 10 nm LaFeO₃/Pt particles produced in Example 1.
[Figure 6]
   Figure 6 shows a TEM photograph (magnification: 3,000,000) of carbon particles supporting 10 nm LaFeO₃/Pt particles produced in Example 1.
[Figure 7]

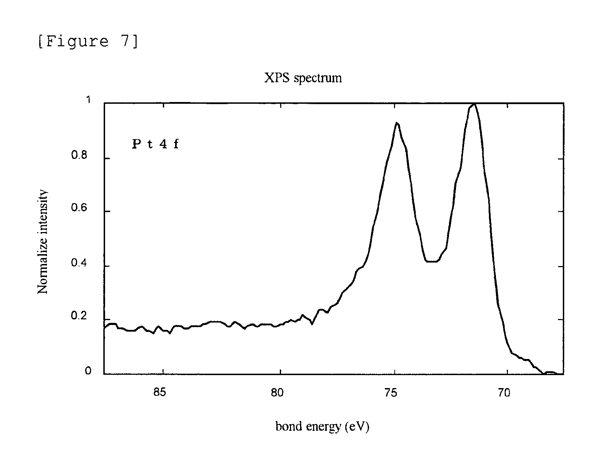

   Figure 7 shows an XPS spectrum of Pt in carbon particles supporting 10 nm LaFeO₃/Pt particles produced in Example 1.

### [Explanation of numerals]

- 1: solid polymer electrolyte membrane
- 2: air electrode
- 3: fuel electrode
- 4: gas diffusion layer for air electrode
- 5: gas diffusion layer for fuel electrode
- 10: membrane electrode assembly (MEA)

### Best Mode for Carrying Out the Invention

The first step of the production of the fine particle-supporting carbon particles of the invention is to prepare a solution containing complex ions (metal complex) of metals that will constitute said perovskite type composite oxide represented by the general formula ABO₃.

"A" represents one or more divalent or trivalent metal elements such as, but not limited to, lanthanum (La), strontium (Sr), cerium (Ce), calcium (Ca), yttrium (Y), erbium (Er), praseodymium (Pr), neodymium (Nd), samarium (Sm), europium (Eu), magnesium (Mg), and barium (Ba), and it also may be any other elements that can form a perovskite structure.

"B" represents one or more transition metal elements selected from iron (Fe), cobalt (Co), manganese (Mn), copper (Cu), titanium (Ti), chrome (Cr), nickel (Ni), niobium (Nb), lead (Pb), bismuth (Bi), antimony (Sb), molybdenum (Mo), and the like.

Said fine noble metal particles contained in said perovskite particles (metal oxide particles) that constitute said perovskite type composite metal oxide particles, which consist of said fine noble metal particles scattered throughout said perovskite type composite metal oxide particle structure, may be of platinum (Pt), ruthenium (Ru), palladium (Pd), or gold (Au), which may be used singly or in combination, or of an alloy consisting of at least one or more of said noble metal elements and transition metal elements (such as iron (Fe), cobalt (Co), manganese (Mn), copper (Cu), titanium (Ti), chrome (Cr), nickel (Ni), niobium (Nb), lead (Pb), bismuth (Bi), antimony (Sb), and molybdenum (Mo)). When used to produce a catalyst for fuel cell electrodes, it is preferred that at least platinum (Pt) is included. The weight of the supported fine noble metal particles should preferably be from 1 to 20 wt% based on that of the fine perovskite type composite metal oxide particles. If the weight of the supported fine noble metal particles is below this range, the quantity of the noble metal is too small as compared with that of the carbon particles that work as carrier, making it difficult to show required catalytic performance, while if it is larger, although the noble metal will be still able to show catalytic performance, its volume will be too large to be fully contained in the perovskite type composite metal oxide particles, and some of the fine noble metal particles will be precipitated and oxidized, leading to an increased proportion of noble metal particles that are degraded by corrosion. Thus, it will be impossible to use the noble metal efficiently, and therefore, such a weight range is not preferred.

Said metal complexes may be either inorganic ones such as chloride complex and amine nitrate complex, or organic ones such as citric acid complex, malic acid complex, and picolinic acid complex, of which the most suitable ones that can exist as ions in the solution and suit the metal elements used are selected for use. It is not preferred, however, that metals other than the intended ones are contained in the solution. For instance, if existing complex compounds such as rubidium salt, cesium salt and other metal salt complexes are simply dissolved in the solution, unintended metal elements will be contained in the solution, which is not preferable. Of the aforementioned complexes, citric acid complex and malic acid complex are particularly preferable because they are adsorbed efficiently on the surface of carbon particles and also because they are easily crosslinked to form a perovskite structure.

In the next step, carbon particles with an average particle diameter of 20 to 70 nm are impregnated with said solution containing metal complex ions. There are no specific limitations on said carbon particles, but the preferred carbon particles include acetylene black such as Denka Black (registered trademark) supplied by Denki Kagaku Kogyo Kabushiki Kaisha, Vulcan (registered trademark) supplied by Cabot Corporation, and ketjen black. Although carbon particles with an average particle diameter of less than 20 nm will be able to show good characteristics as a component of the final catalyst product, they are not preferred because a smaller particle diameter will lead to heavier agglomeration, making uniform dispersion difficult during the synthesis step. An average particle diameter of more than 70 nm is also unpreferable because a decreased specific surface area will cause a decrease in catalytic ability, although the particles will be still able to show good characteristics as a component of the final catalyst product.

The average particle diameter of carbon particles is determined as the averaged size of 100 particles observed in photographs taken with a transmission electron microscope (TEM). For this measurement, an appropriate volume of carbon particles are dispersed to ensure that the volume of the metal elements contained in the solution is such that the total weight of the fine perovskite type composite metal oxide particles and the fine noble metal particles (weight of supported fine particles) is 5 to 50 wt% of the weight of the fine particle-supporting carbon particles, i.e. the final product. Significant problems will not take place if the percentage of the fine particles supported on the fine particle-supporting carbon particles is less than 5 wt%, but when used as catalyst, the total volume of platinum will become smaller, making it difficult for the platinum to function effectively. Significant problems will not take place either if the percentage of the fine particles supported on the fine particle-supporting carbon particles is more than 50 wt%, but as their percentage increases, the fine perovskite type composite metal oxide particles will be more likely to overlap each other or agglomerate instead of being contained in a monolayer surface of the carbon particles.

As described above, complex ions of metals that are to constitute composite metal oxide particles and noble metal particles are allowed to be adsorbed on the surface of carbon particles, and then they are dried to deposit precursory fine particles of the fine noble metal particle-containing perovskite type composite metal oxide on the surface of the carbon particles. The metal complexes adsorbed on the surface of the carbon particles are in the state of ions and dispersed at a molecular level in the solution. They can be maintained in this disperse state as they are adsorbed on adsorption points in the carbon surface, and when dried, only the nearest neighboring complexes are crystallized together to deposit precursory particles with a diameter of 20 nm or less of the perovskite type composite metal oxide and noble metal particles. The drying operation may be performed in air or in a vacuum. There are no specific limitations on the atmosphere to be used, but drying in air is preferred because it is the easiest and low in cost.

Furthermore, the fine particle-supporting carbon particles thus obtained are then heat-treated. The heat treatment should preferably be carried out in an inert gas atmosphere such as nitrogen and argon. An atmosphere containing oxygen is not preferred because the carbon particles, which act as carrier, may be burned, and a reducing atmosphere is not preferred either because the adsorbed precursory particles may fail to form a perovskite type composite metal oxide. The heat treatment should preferably be carried out in the temperature range of 500 to 1000°C, more preferably 550 to 700°C. The most preferable heat treatment temperature depends on the crystallization temperature of the perovskite type composite metal oxide and hence on the elements selected as "component A" and "component B." If A=La and B=Fe, for instance, a perovskite type structure will not be formed at 500°C or below, while the particles will be sintered at a high temperature of 1000°C or above, making it difficult to maintain nanosized fine perovskite type composite metal oxide particles. Accordingly, the most preferable way is to carry out the heat treatment at the lowest point of the temperature range where the metal elements in the composition used can be crystallized.

The method described above serves to produce fine particle-supporting carbon particles with an average particle diameter of 20 nm to 90 nm that support fine perovskite type composite metal oxide particles having a crystallite size of 1 nm to 20 nm and supporting monodisperse fine noble metal particles scattered throughout the former particle structure. Said average particle diameter of the fine particle-supporting carbon particles is determined as the average size of 100 particles observed in TEM photographs.

Here, the aforementioned perovskite type composite oxide particles are expected to function as catalyst if their crystallite size is less than 1 nm, stable bonding will not be achieved easily because the number of lattice points is too small due to the features of the crystal system of the perovskite structure, and accordingly, it will be difficult to maintain a perovskite structure and also to achieve stable production due to these reasons. On the other hand, required catalyst characteristics will be still maintained if the crystallite size is more than 20 nm, it will be difficult for the fine noble metal particles existing at deep points in the oxide particles to contribute to the catalytic reaction, and their catalytic performance may be reduced. For these reasons, the crystallite size of the fine perovskite type composite metal oxide particles that contain noble metal particles in their particle bodies should preferably be in the range of 1 to 20 nm.

In such fine particles with a size of 20 nm or less, it is rare for a polycrystalline structure to form in a single particle, but single crystal particles are produced in most cases. Therefore, the average particle diameter of the supported fine particles can be determined not only from TEM photographic measurements but also from the average crystallite size calculated from the powder X-ray diffraction spectrum. For fine particles with a particle diameter of several nanometers or less, in particular, it should preferably be determined from the average crystallite size because visual observation performed to determine the particle diameter from TEM photographs will involve significant measurement errors. If there are large particles with a polycrystalline structure, however, the diameter measurements taken may be of the crystallites contained in those large particles, and therefore, it should be confirmed that the particle diameter determined from the average crystallite size is consistent with the particle size observed by TEM.

If the fine noble metal particles (for instance, fine platinum particles) exist throughout the oxide particle structure including not only its surface but also its interior (for instance, see Figure 1), TEM photographs will show only the oxide particles, and it will be impossible to observe the noble metal particles separately because they are integrated with the oxide. In such cases, furthermore, it will sometimes be difficult to identify crystalline phases by X-ray diffraction (XRD). Therefore, an appropriate measuring means such as X-ray photoelectron spectroscopy (XPS) should be used to confirm that the noble metal elements contained are actually metallic. Moreover, if the fine noble metal particles exist throughout the particle bodies including their surface and interior, the oxide particles and the fine noble metal particles are scattered uniformly in the bodies, and therefore surface composition analysis by means of XPS will show that their existence ratio is nearly the same as that for the entire bodies.

On the other hand, it is reported that if the fine noble metal particles are supported only on the outermost face (for instance, see Figure 2), the catalytic ability will be highest when those fine noble metal particles have a particles size of 3 to 5 nm, and XRD can serve for identification of the crystalline phases. In this case, furthermore, the fine noble metal particles on the oxide particles can be identified by TEM observation. All existing fine noble metal particles exist on the surface, and therefore, the comparison between their existence ratio determined by XPS surface composition analysis and the existence ratio for the entire bodies will suggest that there are excess noble metal elements.

Furthermore, if the fine noble metal particles are completely covered by the oxide particles (for instance, see Figure 3), those fine noble metal particles, as a matter of course, will not be observed in TEM photographs, and the noble metal elements will not be found in XPS surface elemental analysis. In such cases, it will sometimes be difficult for XRD analysis to identify the crystalline phases of the noble metal particles.

From the above description, the evaluation results for different fine noble metal particle compositions are summarized as follows.

**[Table 1]**

| | Structure of fine noble metal particles | Existing in oxide | Supported on outermost face | Completely covered |
|---|---|---|---|---|
| Measuring means | TEM | not observable | observable | not observable |
| | XRD | difficult in some cases | detectable | difficult in some cases |
| | XPS | detectable, initial ratio | detectable, excess platinum | undetectable |

Here, a composite structure comprising noble metal phases scattered in oxide phases is shown as an example of fine noble metal particles existing throughout the oxide particles, but similar evaluation results will be obtained in a case where noble metal particles exist in the pores of porous oxide particles. In a case where noble metal particles exist in the pores of oxide particles that are porous only in their surface, however, the results obtained will be the same as those for the case where the fine noble metal particles are supported only on the outermost face as shown in Figure 2, and such cases are not included in the present invention. For the evaluation, at least all of the aforementioned methods, including XRD for identifying the crystal structure of the oxide particles, should be used to carry out careful identification.

Next, a membrane electrode assembly (MEA) for fuel cells produced from the fine particle-supporting carbon particles of the invention is described below as an example of the application of the fine particle-supporting carbon particles to electrode catalysts.

Figure 4 schematically shows a cross-sectional structure of the membrane electrode assembly (MEA) for fuel cells. The membrane electrode assembly 10 comprises a solid polymer electrolyte membrane 1, an air electrode 2 provided on one side in the thickness direction of the membrane, a fuel electrode 3 provided on the other side, a gas diffusion layer 4 for the air electrode provided on the outer side of the air electrode 2, and a gas diffusion layer 5 for the fuel electrode provided on the outer side of the fuel electrode 3. Of these, the solid polymer electrolyte membrane 1 may be a polyperfluorosulfonic acid resin membrane such as Nafion (trade name) supplied by Du Pont, Flemion (trade name) supplied by Asahi glass Co., Ltd., and Aciplex (trade name) supplied by Asahi Chemical Industry Co., Ltd. The gas diffusion layers 4 and 5 may be a piece of porous carbon cloth or a carbon sheet. A common process as described below may be used to produce the membrane electrode assembly 10.

Catalyst-supporting carbon particles, polymers, and required agents such as binder are added to a solvent mainly comprising a lower alcohol such as ethanol and propanol, and dispersed by using a common dispersion apparatus such as magnetic stirrer, ball mill, and ultrasonic dispersion apparatus to produce a catalyst paint. For this process, the quantity of the solvent is adjusted so as to produce a paint with an optimum viscosity for the coating method used. Then, the catalyst paint obtained is used to produce the air electrode 2 or the fuel electrode 3, followed in most cases by one of the three steps (1) to (3) described below. Any of the evaluation means may be used for the fine particle-supporting carbon particles of the invention, but the same production process should be used when comparative evaluations are to be made.

(1) The catalyst paint obtained is applied uniformly with an appropriate tool such as bar coater over a releasable base plate such as polytetrafluoroethylene (PTFE) film, polyethylene terephthalate (PET) film, polyimide film, PTFE-coated polyimide film, PTFE-coated silicon sheet, and PTFE-coated glass cloth, and dried to produce an electrode membrane over the releasable base plate. This electrode membrane is peeled off, and cut into pieces with a predetermined electrode size. Two such electrode membranes are produced, and used as either the air electrode or the fuel electrode. Then, each of these electrode membranes is adhered to either side of the solid polymer electrolyte membrane with a hot press or hot roll press, and a gas diffusion layer is provided on the air electrode and on the fuel electrode, followed by integrating them with a hot press to produce a membrane electrode assembly.

(2) The catalyst paint obtained is applied on the gas diffusion layer for the air electrode and on the gas diffusion layer for the fuel electrode, and dried to produce an air electrode and a fuel electrode. Spray coating and screen printing may be used for the coating in this step. Then, these gas diffusion layers coated with an electrode membrane are used to sandwich the solid polymer electrolyte membrane, followed by integrating them with a hot press to produce a membrane electrode assembly.

(3) The catalyst paint obtained is applied on both sides of the solid polymer electrolyte membrane with an appropriate method such as spray coating, and dried to produce a air electrode and a fuel electrode. Then, a gas diffusion layer is provided on either side of the air electrode and the fuel electrode, followed by integrating them with a hot press to produce a membrane electrode assembly.

For the membrane electrode assembly 10 thus obtained as shown in Figure 1, a current collector (not shown in Figure 1) is then provided on the air electrode 2 side and the fuel electrode 3 side to achieve electric connection, and hydrogen and air (oxygen) are supplied to the fuel electrode 3 and the air electrode 2, respectively, to serve as a fuel cell.

### [Example 1]

### < LaFeO₃/Pt = 94/6 by weight, 40 wt% supported particles/carbon >

A 2.23g portion of lanthanum nitrate hexahydrate, 2.08g of iron nitrate nonahydrate, and 0.14g of Hydrogen hexachloroplatinate hexahydrate were dissolved in a solution comprising 80 ml of water and 20 ml of ethanol, and 2.16g of citric acid was added to prepare an aqueous solution containing citrate complex ions of lanthanum, iron and platinum.

Then, 2g of Vulcan XC-72 (registered trademark, carbon black product supplied by Cabot Corporation, average particle diameter 30 nm, the same applying hereinafter), used as carbon particles, was impregnate with about 2 ml of said aqueous solution containing citrate complex ions, and dried at 90°C. It was mixed in a mortar, impregnated again with 2 ml of said aqueous solution containing citrate complex ions, dried at 90°C, followed by mixing in a mortar. This step was repeated, and as a result, a total of 100 ml of the aqueous solution containing citrate complex ions was used for the impregnation to allow said complex compound to be adsorbed on the Vulcan surface. Then, it was dried for about 10 hours in a low-humidity atmosphere at 90°C to produce carbon particles (powder) supporting a compound of lanthanum, iron and platinum. The carbon particles were heat-treated in nitrogen at 600°C, and rinsed to produce LaFeO₃/Pt-supporting carbon particles. i.e., carbon particles that supported platinum particle-containing fine perovskite type oxide particles.

The LaFeO₃/Pt-supporting carbon particles thus obtained were observed by XRD. As shown in Figure 5, a distinct single phase peak of the perovskite type structure was seen while no peaks relating to platinum particles were found. In this observation, the average crystallite size of the oxide particles determined from the half-width of the diffraction peak was 12.2 nm. As seen from Figure 6, TEM observations indicated that fine composite metal oxide particles of about 10 to 15 nm were supported on the surface of the carbon particles, while apparently platinum particles were not found. In addition, X-ray fluorescence (XRF) analysis was carried out to determine the composition and the quantity of the supported particles, and results showed that the measurements were nearly consistent with the ratio of the initially fed components. XPS analysis was also performed to observe the state of the elements on the surface, and results showed that the existence ratio for platinum was nearly consistent with the original component ratio of LaFeO₃/Pt = 94/6 by weight. Furthermore, it was confirmed from the XPS spectrum given in Figure 7 that the platinum component was in the metallic single phase state.

### [Example 2]

### < LaFeO₃/Pt = 94/6 by weight, 20 wt% supported particles/carbon >

The same procedure for producing fine particle-supporting carbon particles as in Example 1 except that 5g of Vulcan XC-72 was impregnated with the aqueous solution containing citrate complex ions of lanthanum, iron and platinum was carried out to produce LaFeO₃/Pt-supporting carbon particles. i.e., carbon particles that supported platinum particle-containing fine perovskite type oxide particles.

The LaFeO₃/Pt-supporting carbon particles thus obtained were observed by XRD. A distinct single phase peak of the perovskite type structure was seen as in Example 1 while no peaks relating to platinum particles were found. In this observation, the average crystallite size determined from the half-width of the diffraction peak was 8.6 nm. TEM observations indicated that fine composite metal oxide particles of about 5 to 10 nm were supported on the surface of the carbon particles, while apparently platinum particles were not found. In addition, XPS analysis was performed, and results showed that as in Example 1, the existence ratio for platinum was nearly consistent with the original component ratio of LaFeO₃/Pt = 94/6 by weight. Furthermore, it was confirmed that the platinum component was in the metallic state.

### [Example 3]

### < LaFeO₃/Pt = 85/15 by weight, 40 wt% supported particles/carbon >

The same procedure for producing fine particle-supporting carbon particles as in Example 1 except that 1.89g of lanthanum nitrate hexahydrate, 1.77g of iron nitrate nonahydrate, and 0.42g of Hydrogen hexachloroplatinate hexahydrate were dissolved in a solution consisting of 80 ml of water and 20 ml of ethanol was carried out to produce LaFeO₃/Pt-supporting carbon particles. i.e., carbon particles that supported platinum particle-containing fine perovskite type oxide particles.

The LaFeO₃/Pt-supporting carbon particles thus obtained were observed by XRD. As in Example 1, a distinct single phase peak of the perovskite type structure was seen while no peaks relating to platinum particles were found. In this observation, the average crystallite size determined from the half-width of the diffraction peak was 18.3 nm. TEM observations indicated that fine composite metal oxide particles of about 15 to 20 nm were supported on the surface of the carbon particles, while apparently platinum particles were not found. In addition, XPS analysis was performed, and results showed that the existence ratio for platinum was nearly consistent with the original component ratio of LaFeO₃/Pt = 85/15 by weight. Furthermore, it was confirmed that the platinum component was in the metallic state.

### [Example 4]

### < La(FE_{0.7} CO_{0.3})O₃/Pt = 94/6 by weight, 40 wt% supported particles/carbon >

The same procedure as in Example 1 except that 1.85g of lanthanum chloride heptahydrate, 0.77g of iron chloride hexahydrate, 0.45g of cobalt chloride monohydrate, and 0.12g of Hydrogen hexachloroplatinate hexahydrate was dissolved in a solution consisting of 80 ml of water and 20 ml of ethanol was carried out to produce La(FE_{0.7} CO_{0.3})O₃/Pt-supporting carbon particles. i.e., carbon particles that supported platinum particle-containing fine perovskite type oxide particles.

The La(FE_{0.7} CO_{0.3}) O₃/Pt-supporting carbon particles thus obtained were observed by XRD. As in Example 1, a distinct single phase peak of the perovskite type structure was seen while no peaks relating to platinum particles were found. In this observation, the average crystallite size determined from the half-width of the diffraction peak was 9.8 nm. TEM observations indicated that fine composite metal oxide particles of about 10 nm were supported on the surface of the carbon particles, while apparently platinum particles were not found. In addition, XPS analysis was performed, and results showed that the existence ratio for platinum was nearly consistent with the original component ratio of La(FE_{0.7} CO_{0.3})O₃/Pt = 94/6 by weight. Furthermore, it was confirmed that the platinum component was in the metallic state.

### [Comparative example 1] (excess amount of supported platinum, larger than 20 wt%)

### < LaFeO₃/Pt = 70/30 by weight, 40 wt% supported particles >

The same procedure for producing fine particle-supporting carbon particles as in Example 1 except that 1.66g of lanthanum nitrate hexahydrate, 1.55g of iron nitrate nonahydrate, and 0.70g of Hydrogen hexachloroplatinate hexahydrate were dissolved in a solution consisting of 80 ml of water and 20 ml of ethanol was carried out to produce LaFeO₃/Pt-supporting carbon particles. i.e., carbon particles that supported platinum particle-containing fine perovskite type oxide particles.

The LaFeO₃/Pt-supporting carbon particles thus obtained were observed by XRD. Weak intensities attributable to platinum particles were found in addition to a distinct peak of the perovskite type structure. In this observation, the average crystallite size of the oxide particles determined from the half-width of the diffraction peak was 11.4 nm. It was impossible to determine the crystallite size relating to the platinum particles because the intensities were too weak. These TEM observations indicated that fine composite metal oxide particles of about 10 nm were supported on the surface of the carbon particles, while apparently platinum particles with a diameter of 3 nm were found though their number was small. In addition, XPS analysis was performed, and results showed that a large quantity of platinum was found as compared with the original component ratio of LaFeO₃/Pt = 70/30. Actually, the ratio was about 66/34 by weight, indicating that the platinum component was in the metallic state.

### [Comparative example 2] (Pt particles supported only on outermost face as shown in Figure 2)

### < LaFeO₃/Pt = 94/6 by weight, total 40 wt% supported separately >

The same procedure for producing fine particle-supporting carbon particles as in Example 1 except that said 0.14g of Hydrogen hexachloroplatinate hexahydrate was not added to produce a water/ethanol solution containing complex ions of lanthanum and iron. The carbon particles were impregnated with this solution as in example 1 to produce carbon particles (powder) that supported a compound of lanthanum and iron. The carbon particles were heat-treated in nitrogen at 550°C to produce LaFeO₃-supporting carbon particles. Then, 0.14g of Hydrogen hexachloroplatinate hexahydrate was dissolved in 60g of ethanol to produce an ethanol solution containing platinum ions. The oxide-supporting carbon particles were impregnated with this solution, dried at 60°C, heat-treated in hydrogen at 600°C, and rinsed to produce fine perovskite type composite metal oxide (LaFeO₃) particles and fine platinum (Pt) particle-supporting carbon particles.

The LaFeO₃/Pt-supporting carbon particles thus obtained were observed by XRD. A peak attributable to platinum particles was found in addition to a distinct peak of the perovskite type structure. In this observation, the average crystallite size of the fine oxide particles determined from the half-width of the diffraction peak was 9.2 nm, and that of the fine platinum particles was 4.3 nm. These TEM observations showed that fine composite metal oxide particles of about 10 nm and platinum particles of about 4 nm are supported on the carbon particles. In addition, XPS analysis was performed, and results showed that an extremely large quantity of platinum was found as compared with the original component ratio of LaFeO₃/Pt = 94/6 by weight. Actually, the ratio was about 69/31, indicating that the platinum component was in the metallic state.

### [Comparative example 3] (oxide completely covering Pt particles, as shown in Figure 3)

### < LaFeO₃/Pt = 94/6 by weight, total 40 wt%, oxide covering supported particles >

The same procedure for producing fine particle-supporting carbon particles as in Comparative example 2 was carried out except that Vulcan XC-72 was not used for impregnating carbon particles with a solution containing complex ions of lanthanum and iron, but platinum-supporting carbon particles (platinum particles having an average particle diameter of 5 nm) produced by depositing 2.4 wt% platinum particles on carbon particles were impregnated to provide carbon particles (powder) supporting a compound of lanthanum and iron and platinum particles, followed by heat-treating the carbon particles in nitrogen at 600°C to produce carbon particles supporting platinum (Pt) particles covered by perovskite type composite metal oxide (LaFeO₃).

The LaFeO₃/Pt-supporting carbon particles thus obtained were observed by XRD. Weak intensities attributable to platinum particles were found in addition to a distinct peak of the perovskite type structure. In this observation, the average crystallite size of the oxide particles determined from the half-width of the diffraction peak was 22.6 nm. It was impossible to determine the crystallite size of the platinum particles because the intensities were too weak. These TEM observations indicated that only fine composite metal oxide particles of about 20 nm were supported on the carbon particle. In addition, XPS analysis was performed, and results showed that the quantity of platinum was below the measuring limit, indicating that virtually no platinum existed on the surface.

### [Example 5]

In this example, membrane electrode assemblies (MEA) for fuel cells were produced and their output characteristics as fuel cells were determined to evaluate the catalyst characteristics of the fine particle-supporting carbon particles produced in the above examples and comparative examples. In a membrane electrode assembly (MEA) comprising electrodes of such fine particle-supporting carbon particles as produced above, the air electrode and the fuel electrode require different oxide contents in the fine particle-supporting carbon particles (the contents of the fine oxide particles supported on the carbon particles) to achieve maximum effects. In this example, therefore, an electrode membrane of fine particle-supporting carbon particles was used as the fuel electrode while a standard electrode membrane shown below was used as the air electrode to achieve impartial evaluation.

### < electrode membrane of fine particle-supporting carbon particles >

One part by mass of the fine particle-supporting carbon particles produced in the aforementioned examples and comparative examples were added to 9.72 parts by mass of a Nafion (trade name, EW = 1000) solution supplied by Aldrich, which was a 5 mass% solution of polyperfluorosulfonic acid resin, 2.52 parts by mass of a Nafion (trade name) solution supplied by Du Pont, which was a 20 mass% solution of polyperfluorosulfonic acid resin, and 1 part by mass of water, and a catalyst paint was prepared by stirring the liquid mixture sufficiently to achieve uniform dispersion. The aforementioned catalyst paint was applied over a PTFE film while adjusting the quantity of the supported platinum to 0.03 mg/cm², and then the paint was dried and peeled off to provide an electrode membrane of fine particle-supporting carbon particles.

### < standard electrode membrane >

As the standard electrode, 10E50E (trade name), platinum-supporting carbon (which supports 50 mass% platinum) supplied by Tanaka Kikinzoku Kogyo, was used to prepare a catalyst paint by the same procedure as described above. The catalyst paint was applied over a PTFE film while adjusting the quantity of the supported platinum to 0.5 mg/cm², and then the paint was dried and peeled off to provide a standard electrode membrane.

### < membrane electrode assembly >

To provide a solid polymer electrolyte membrane, Nafion 112 (trade name), a polyperfluorosulfonic acid resin membrane product supplied by Du Pont, was cut into pieces of a predetermined size. The electrode membrane of fine particle-supporting carbon particles and the standard electrode membrane produced above were attached to either side of the solid polymer electrolyte membrane and they were adhered to each other using a hot press under the conditions of a temperature of 160°C and a pressure of 4.4 MPa. Then, carbon nonwoven fabric (TGP-H-120 supplied by Toray Industries, Inc.) that had been subjected to water repellent finishing and the solid polymer electrolyte membrane having an electrode membrane on each side were adhered with a hot press to produce a membrane electrode assembly.

### < output characteristics evaluation >

The membrane electrode assembly produced above was used to measure the output characteristics (specifically, maximum output density) expected from a fuel cell comprising the assembly. For the measurement, the measuring system including the membrane electrode assembly was maintained at 60°C, and hydrogen gas humidified and heated to adjust the dew point to 60°C is supplied to the fuel electrode while air humidified and heated to adjust the dew point to 60°C is supplied to the air electrode.

Table 2 summarizes measurements for the fine particle-supporting carbon particles produced in Examples 1 to 4 and Comparative examples 1 to 3 described above, and measurements for the membrane electrode assemblies produced in Example 5 using these fine particle-supporting carbon particles. Here, the "supported particle diameter" is the diameter of the supported oxide particles determined from the average crystallite size, the "TEM observation particle diameter" being a rough diameter value of the supported.oxide particles determined from visual observation with TEM, and the "average particle diameter" being the average diameter of the fine particle-supporting carbon particles determined from 100 particles observed in TEM photographs.

**[Table 2]**

| < Fine particle-supporting carbon particles > | | | | | | | | |
|---|---|---|---|---|---|---|---|---|
| | Composition (oxide/Pt), by weight | XRD results | Supported particle, wt% | Supported particle diameter, nm | TEM observation, nm | Average particle diameter, nm | XPS results (oxide/Pt), by weight | Maximum output density, mW/cm² |
| Example 1 | LaFeO₃/Pt =94/6 | perovskite type | 40 | 12.2 | 10~15 | 37 | 94/6 | 178 |
| Example 2 | LaFeO₃/Pt =94/6 | perovskite type | 20 | 8.6 | 5~10 | 39 | 94/6 | 161 |
| Example 3 | LaFeO₃/Pt =85/15 | perovskite type | 40 | 18.3 | 15~20 | 39 | 85/15 | 181 |
| Example 4 | La(Fe_{0.7}CO_{0.3}) O₃/Pt =94/6 | perovskite type | 40 | 9.8 | ~10 | 36 | 94/6 | 187 |
| Comparative example 1 | LaFeO₃/Pt =70/30 | perovskite type + metallic Pt | 40 | 11.4 | ~10 Pt~3 | 36 | 66/34 | 209 |
| Comparative example 2 | LaFeO₃/Pt =94/6 | perovskite type + metallic Pt | 40 | (separated) 9.2 Pt=4.3 | ~10 Pt~4 | 37 | 69/31 | 224 |
| Comparative example 3 | LaFeO₃/Pt =94/6 | perovskite type + metallic Pt | 40 | (covered) 22.6 (Pt=5) | ~20 | 41 | 100/0 | ~10 |

### < evaluation for resistance to oxidation >

To evaluate the oxidation resistance of the fine particle-supporting carbon particles, the fine particle-supporting carbon particles produced in Example 1 and Comparative examples 1 and 2 were used because they had typical compositions, and changes in their physical properties in air were measured. Before the measurement, each sample was oxidized in air at 150°C for 48 hours.

For the fine particle-supporting carbon particles treated as described above, powder X-ray diffraction spectra were measured to determine their crystal structures. The fine particle-supporting carbon particles of Example 1 showed the existence of the perovskite type structure, and no changes were found as compared with the observation made before the treatment. On the other hand, the fine particle-supporting carbon particles of Comparative example 1 showed weak intensities from the metallic platinum structure before the treatment, but the intensities disappeared, indicating that the quantity of the platinum in the metallic phase decreased to such a very low level that it was not detected by XRD analysis. The fine particle-supporting carbon particles of the Comparative example 2 comprised two phases, i.e. perovskite type structure and metallic platinum structure, before the treatment, but three phases, i.e. perovskite type structure, metallic platinum structure, and platinum oxide (PtO), were detected after the treatment.

Furthermore, TEM observation of these particles showed that the fine particle-supporting carbon particles of Example 1 comprised about 10 to 15 nm particles supported on the carbon particles, and significant changes were not seen in particle diameter as compared with the particles before the treatment. For the fine particle-supporting carbon particles of Comparative example 1, two types of particles, i.e. about 10 nm composite oxide particles and about 3 nm particles containing a platinum element that appeared to be attributed to platinum oxide, and no changes were detected visually. On the other hand, about 10 nm oxide particles and about 8 to 9 nm platinum particle-supporting carbon particles were found in the platinum-supporting carbon particles of Comparative example 2, indicating that the particle diameter increased as compared with the untreated platinum particles that had a diameter of about 4 nm.

Then, the oxidation-treated fine particle-supporting carbon particles were used to produce membrane electrode assembles by carrying out the same procedure as in Example 5, and evaluation of their output characteristics was performed.

Table 3 shows results of their evaluation for oxidation resistance and output characteristics.

**[Table 3]**

| < evaluation for resistance to oxidation > | | | | | | |
|---|---|---|---|---|---|---|
| | XRD results | | TEM observation, nm | | Maximum output density, mW/cm² | |
| | before treatment | after treatment | before treatment | after treatment | before treatment | after treatment |
| Example 1 | perovskite type | perovskite type | 10~15 | 10∼15 | 178 | 171 |
| Comparative example 1 | perovskite type + Pt | perovskite type | ∼10 Pt ~3 | ∼10 PtOx ~3 | 209 | 114 |
| Comparative example 2 | perovskite type + Pt | perovskite type + Pt + PtO | ∼10 Pt ∼4 | ∼10 Pt 8~9 | 224 | 103 |

As obvious from Table 2 given previously, all fine particle-supporting carbon particles produced in the examples had the following features: (1) TEM observation detected only one type of particles, and there were no particles that appeared to be of metallic platinum, (2) XRD observation detected a single phase of the perovskite structure, and (3) XPS observation indicated that the ratio of the initially fed components was nearly consistent with the surface element composition. In addition, their crystallite size was 20 nm or less.

In Comparative example 1, on the other hand, the quantity of initially fed platinum was too large, and excess platinum particles that failed to stay on the oxide particles were separated and precipitated, resulting in about 3 nm platinum particles being sometimes observed though the frequency of their existence was low. Observation for Comparative example 2 showed platinum particles that were supported on oxide particle-supporting carbon particles, and the existence ratio of platinum on the surface was much larger than that for the initially fed components. In Comparative example 3, a perovskite type composite oxide was deposited on the surface of carbon particles that supported about 5 nm platinum particles and allowed the perovskite type oxide to cover the platinum, and as a result, no platinum appeared on the surface.

As seen from Table 2, furthermore, only a small output can be obtained from carbon particles with platinum completely covered by an oxide as in Comparative example 3. If metallic platinum particles exist on the surface as in Comparative examples 1 and 2, on the other hand, the excellent catalyst characteristics of the metallic platinum particles served to produce an equivalent or higher initial output density as compared with the samples produced in the other examples. Results of the evaluation for oxidation resistance given in Table 2 indicate, however, that the samples produced in Example 1 showed no significant changes in the output density while those produced in Comparative examples 1 and 2 suffered degradation in characteristics. This may be because part of the initially fed platinum component in Comparative example 1 stayed in the oxide particles while the excess was precipitated to form isolated metallic platinum particles, and although their existence ratio was low, serving to prevent their growth into coarse particles due to agglutination, they were precipitated on the surface and inevitably oxidized, leading to deterioration in the catalytic ability per unit quantity of platinum. Results for Comparative example 2 suggest that the metallic platinum particles were agglutinated to form coarse particles and part of them were oxidized into platinum oxide, leading to degradation in their output characteristics.

## Claims

1. Fine particle-supporting carbon particles comprising carbon particles supporting fine perovskite type composite metal oxide particles and fine noble metal particles wherein the weight of the supported fine noble metal particles is from 1 to 20% based on that of the fine perovskite type composite metal oxide particles, said fine perovskite type composite metal oxide particles having a crystallite size of 1 to 20 nm, and fine noble metal particles smaller in particle diameter than said perovskite type oxide particles existing throughout the bodies of said perovskite type oxide particles.

2. Fine particle-supporting carbon particles as claimed in claim 1 wherein said fine perovskite type composite metal oxide particles are represented by the general formula ABO₃ wherein A denotes one or more elements selected from the group consisting of lanthanum, strontium, cerium, calcium, yttrium, erbium, praseodymium, neodymium, samarium, europium, magnesium, and barium, and B denotes one or more transition metal elements selected from the group consisting of iron, cobalt, manganese, copper, titanium, chrome, nickel, niobium, lead, bismuth, antimony, and molybdenum.

3. Fine particle-supporting carbon particles as claimed in claim 2 wherein said fine noble metal particles comprise one or more noble metal elements selected from the group consisting of platinum, ruthenium, palladium, and gold, or an alloy of said one or more noble metal elements and one or more transition metal elements selected from the group consisting of iron, cobalt, manganese, copper, titanium, chrome, nickel, niobium, lead, bismuth, antimony, and molybdenum.

4. Fine particle-supporting carbon particles as claimed in any of claims 1 to 3 wherein the ratio by weight of said supported fine perovskite type composite metal oxide particles and fine noble metal particles ([weight of fine perovskite type composite metal oxide particles and fine noble metal particles]/[total weight of the fine particle-supporting carbon particles]) is in the range of 5 to 50 wt%.

5. Fine particle-supporting carbon particles as claimed in any of claims 1 to 3 wherein the average particle diameter of said carbon particles that support fine perovskite type composite metal oxide particles and fine noble metal particles is in the range of 20 to 70 nm.

6. Fine particle-supporting carbon particles as claimed in any of claims 1 to 3 wherein they have an average particle diameter of from 20 to 90 nm.

7. A process for producing fine particle-supporting carbon particles as claimed in claim 1 comprising the following steps: first, preparing a solution containing complex ions of metals and noble metals that are to constitute said fine perovskite type composite metal oxide particles and noble metal particles, then repeating the operation of impregnating carbon particles with the resulting solution and drying them to achieve adsorption of said complex ions on said carbon particles, and heat-treating them.

8. A process for producing fine particle-supporting carbon particles as claimed in claim 1 comprising the following steps: first, preparing a solution containing complex ions of metals and noble metals that are to constitute said fine perovskite type composite metal oxide particles and noble metal particles, then repeating the operation of impregnating carbon particles with the resulting solution and drying them to achieve adsorption of said complex ions on said carbon particles, drying them in a low humidity atmosphere, and heat-treating them in an inert gas so that said fine perovskite type composite metal oxide particles are deposited and supported on the surface of said carbon particles.

9. An electrode for fuel cells comprising fine particle-supporting carbon particles as claimed in any of claims 1 to 6.
